# EUROPEAN PATENT SPECIFICATION

(11) **EP 0 480 665 B1**
(45) Date of publication and mention of the grant of the patent: **31.05.1995**
(21) Application number: 91309192.2
(22) Date of filing: 08.10.1991
(51) Int. Cl.: A23G 9/04

(54) **Method of producing ice cream**
Verfahren zur Herstellung von Eiscreme
Méthode pour la production de la crème glacée

(30) Priority: 08.10.1990 JP 271410/90
(43) Date of publication of application: 15.04.1992
(73) Proprietor: IOKI NUTRY Co., Ltd., Kameyama, Himeji 670 (JP)
(72) Inventor: Ioki, Kazuhiro, Himeji 670 (JP); Suzuki, Shingo, Shikama-ku, Himeji 672 (JP)
(74) Representative: Rackham, Anthony Charles

(56) References cited:
- US-A- 4 908 223
- PATENT ABSTRACTS OF JAPAN vol. 13, no. 79 (C-571)(3427), 22 February 1989; & JP - A - 63269957 (SHIYA TOREEZE K.K.) 08.11.1988

## Description

The present invention relates to the production of ice cream, particularly an ice cream containing a rice flour.

In accordance with a diversity of the recent consumer's taste with respect to an ice cream, and a growth of the consumer's interest in their figure (beauty) and health, the manufacturers have been therefore required to develop ice cream having the taste and nutritive constitution for responding to such consumer's requirements.

A conventional ice cream, e.g., a vanilla ice cream, is generally produced by using a large amount of sugar (granulated sugar), butterfat (milk), fresh cream, and so on as shown in the following Table 1:

**Table 1**

| Ingredient A | Amount | Ingredient B | Amount |
|---|---|---|---|
| Milk (Fat 3.2%) | 550g | Milk | 100g |
| Fresh Cream (Fat 45%) | 180g | Vanillabeans | 0.5 bottle |
| Granulated Sugar | 145g | COINTREAU | 6g |
| Glucose | 13g | | |
| Egg Yolk | 60g | | |
| Skim Milk Powder | 45g | | |
| Stabilizers | 7g | | |

Specifically, a conventional producing method comprises:
(1) mixing the ingredients (A) of Table 1 in a bowl,
(2) putting the mixture so prepared into an ice cream pasteurizer (Mixed Ingredient Stirring-Heating Device), and conducting a high-temperature sterilization and an alpha treatment simultaneously,
(3) putting the said heated mixture into an aging pad (Mixed Ingredient Cooling-Aging Device), and preparing a yellow base 1,000g (butterfat 3.5%; non-fat solids 9.2%),
(4) carefully adding the ingredients(B) of Table 1, one by one, to the yellow base and mixing therewith,
(5) leaving the resulting mixture in an ice cream freezer for five to ten minutes, and
(6) preserving the thus prepared ice cream in a refrigerator.

Since the aforementioned conventional ice cream is rich in fat and sugar, and has a high nutritive value (calorie), such ice cream would not satisfy the consumer's taste and is not preferable for figure and health.

Patent Abstracts of Japan, Vol 13, 79 (C-571 (3427)), 1989 describes the production of ice cream using unpolished rice milk obtained by heating unpolished rice and water to a glutinous state.

US-A-4 908 223 describes a rice-based frozen dessert prepared by using rice bran flour and polished rice.

In the field of the art, a low-calorie ice cream to be acceptable by all consumers and an ice cream having taste and nutritive balance thereof have been desired.

Therefore according to the invention there is provided a method for producing ice cream comprising the steps of:
(a) mixing rice flour, low-fat and/or skimmed milk or fruit juice and/or puree, alkaline water and granulated sugar,
(b) heating and stirring the thus prepared mixture, and then cooling and stirring the mixture to prepare a base mix,
(c) adding a seasoning ingredient containing low-fat fresh cream or yoghurt, a liqueur or syrup, and optionally one of egg yolk, ground tea powder and coffee paste, one by one to the base mix and mixing therewith,
(d) mixing a flavouring with the mixture thus prepared, and
(e) preserving the thus prepared mixture by refrigeration.
Thus responding to such situation in the art, the present invention provides an ice cream having an ideal nutritive constitution, e.g., very small quantity of fat, a reduced calorie of less than a half of a conventional ice cream, and enrichment in natural sugars, a fresh flavour, and the taste of the seasoning ingredients to respond to the diversity of the consumer's taste and their interest for figure and health.

Specifically, the present invention is characterized by introducing rice flour into the ingredients of the ice cream, and constitutions thereof are as follows.
(1) An ice cream made from;
   a mix base containing a rice flour, a low-fat milk, an alkaline water, a granulated sugar and a skimmed milk,
   a seasoning ingredient containing a low-fat fresh cream, a liqueur, and one to be Selected from the group consisting of an egg yolk, a ground tea powder, and a coffee paste, and
   a flavor.
(2) The ice cream wherein said mix base further containing a fruit juice, and said seasoning ingredient is a combination of a low-fat fresh cream, the liqueur and a lemon juice.
(3) The ice cream wherein said ingredient is a combination of a yogurt, a syrup, and the lemon juice.
(4) The ice cream wherein said mix base further containing the fruit juice, and said seasoning ingredient is a combination of the liqueur and a lemon water.

The present invention will become apparent from the following detailed description of the ice cream producing method of the present invention.

### Example 1: Vanilla Ice Cream

The following Table 2 refers to the amounts of the ingredients required for producing the vanilla ice cream (1L).

**Table 2**

| Ingredient (A) | Amount | Ingredient (B) | Amount |
|---|---|---|---|
| Rice Flour* | 100g | Low-Fat Fresh Cream | 100g |
| Low-Fat Milk | 320-400cc | Egg Yolk (one egg; L size) | about 30g |
| Alkaline Water** | 350cc | | |
| Granulated Sugar | 30-80g | Liqueur 1*** | 20cc |
| Skimmed Milk | 100g | Liqueur 2**** | 10cc |

| Ingredient (C) | Amount | | |
|---|---|---|---|
| Beans Powder | 1g | | |
| Vanilla Flavor | 1g | | |

| | | | |
|---|---|---|---|
| * Nonglutinous rice ground by a stamp method and classified by a sieve (preferably 80-meshes) was used. | | | |
| ** Automatic Alkaline Water Preparing Device (Water Purifying System) was used. | | | |
| *** Belise (Tradename) | | | |
| **** Grand Marnier (Tradename) | | | |

### Producing Process Of The Vanilla Ice Cream

(1) The Ingredient (A) described in Table 2 were put into a bowl and mixed well.
   The mixture was put into an improved ice cream pasteurizer (Mixed Ingredient Stirring-Heating Device) equipped with stirring tank to be stirred the ingredients entirely therein, and conducting a high temperature sterilization (80°C; Instantly) and accelerating sufficiently chemical reaction (alpha-treatment) thereof. At this time, making sure of the existence of glutinosity peculiar to the rice flour is required.
   While kept stirring, the mixture was put into an ice cream aging pad (Mixed Ingredient Cooling-Aging Device) and cooled the mixture to reach about 5°C of the ingredient temperature for preparing a mix base.
(2) The Ingredient (B) described in Table 2 were added to the mix base prepared according to above (1), one by one (in order of the larger viscosity), and mixed therewith. In the Ingredient (B), the egg yolk, the low-fat fresh cream, and the liqueur 1 or the liqueur 2 were added in this order. Since the viscosity of the Ingredient (B) were different each other, the addition and the mixing of the ingredients without separating the ingredients one another would be necessary.
(3) The Ingredient (C) described in Table 2 were added to the mixture prepared according to above (2) and mixed therewith, and stirring-cooling the mixture for about five through eight minutes in an ice cream freezer (Italian Gelato Manufacture Type characterized in that an agitation-blade rotating-speed and cooling-rate respectively are great). The freezing time was set to bring an overrun* 120-130% thereof. 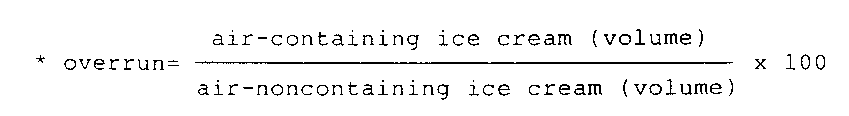
(4) The ice cream prepared according to above (1) through (3) was preserved in an airtight case to prevent the surface of the ice cream from being dried.

### Example 2: Strawberry Ice Cream

The following Table 3 refers to the amounts of the ingredients required for producing the strawberry ice cream (1L).

**Table 3**

| Ingredient (A) | Amount | Ingredient (B) | Amount |
|---|---|---|---|
| Rice Flour* | 100g | Low-Fat Fresh Cream | 50-100cc |
| Low-Fat Milk | 320-400cc | Lemon Juice | 5cc |
| Alkaline Water** | 350cc | Liqueur (Strawberry Liqueur) | 50cc |
| Granulated Sugar | 30-80g | | |
| Skimmed Milk | 100g | | |
| Strawberry Puree (No additives; 100%) | 200cc | | |

| Ingredient (C) | Amount | | |
|---|---|---|---|
| Strawberry Flavor | 5cc | | |

| | | | |
|---|---|---|---|
| * Nonglutinous rice ground by a stamp method and classified by a sieve (preferably 80-meshes) was used. | | | |
| ** Automatic Alkaline Water Preparing Device (Water Purifying System) was used. | | | |

The strawberry ice cream was produced in accordance with the producing method of vanilla ice cream disclosed in the Example 1.

### Example 3: Ground Tea Ice Cream

The following Table 4 refers to the amounts of the ingredients required for producing a ground tea ice cream (1L).

**Table 4**

| Ingredient (A) | Amount | Ingredient (B) | Amount |
|---|---|---|---|
| Rice Flour* | 100g | Low-Fat Fresh Cream | 50-100cc |
| Low-Fat Milk | 320-400cc | Ground Tea Powder | 7g |
| Alkaline Water** | 350cc | Liqueur (Ground Tea Liqueur) | 50cc |
| Granulated Sugar | 30-80g | | |
| Skimmed Milk | 100g | | |

| Ingredient (C) | Amount | | |
|---|---|---|---|
| Ground Tea Flavor | 5cc | | |

| | | | |
|---|---|---|---|
| * Nonglutinous rice ground by a stamp method and classified by a sieve (preferably 80-meshes) was used. | | | |
| ** Automatic Alkaline Water Preparing Device (Water Purifying System) was used. | | | |

The ground tea ice cream was produced in accordance with the producing method of vanilla ice cream disclosed in the Example 1.

### Example 4: Capchino Ice Cream

The following Table 5 refers to the amounts of the ingredients required for producing a capchino ice cream (1L).

**Table 5**

| Ingredient (A) | Amount | Ingredient (B) | Amount |
|---|---|---|---|
| Rice Flour* | 100g | Low-Fat Fresh Cream | 50-100cc |
| Low-Fat Milk | 320-400cc | Coffee Paste | 15g |
| Alkaline Water** | 350cc | Liqueur (KAAHLÚA) | 50cc |
| Granulated Sugar | 30-80g | | |
| Skimmed Milk | 100g | | |

| Ingredient (C) | Amount | | |
|---|---|---|---|
| Coffee Flavor | 5cc | | |

| | | | |
|---|---|---|---|
| * Nonglutinous rice ground by a stamp method and classified by a sieve (preferably 80-meshes) was used. | | | |
| ** Automatic Alkaline Water Preparing Device (Water Purifying System) was used. | | | |

The capchino ice cream was produced in accordance with the producing method of vanilla ice cream disclosed in the Example 1.

### Example 5: Yogurt Ice Cream

The following Table 6 refers to the amounts of the ingredients required for producing a yogurt ice cream (1L).

**Table 6**

| Ingredient (A) | Amount | Ingredient (B) | Amount |
|---|---|---|---|
| Rice Flour* | 100g | Syrup | 120cc |
| Low-Fat Milk | 320-400cc | Lemon Juice | 20cc |
| Alkaline Water** | 350cc | Yogurt (Natural Type) | 500cc |
| Granulated Sugar | 30-80g | | |
| Skimmed Milk | 100g | | |

| Ingredient (C) | Amount | | |
|---|---|---|---|
| Yogurt Flavor | 5cc | | |

| | | | |
|---|---|---|---|
| * Nonglutinous rice ground by a stamp method and classified by a sieve (preferably 80-meshes) was used. | | | |
| ** Automatic Alkaline Water Preparing Device (Water Purifying System) was used. | | | |

The yogurt ice cream was produced in accordance with the producing method of vanilla ice cream disclosed in the Example 1.

### Example 6: Valencia Orange Ice Cream

The following Table 7 refers to the amounts of the ingredients required for producing a valencia orange ice cream (1L).

**Table 7**

| Ingredient (A) | Amount | Ingredient (B) | Amount |
|---|---|---|---|
| Rice Flour* | 100g | Lemon Water | 10cc |
| Valencia Orange Juice (Fruit Juice; 100%) | 100cc | Liqueur (Orange Liqueur) | 50cc |
| Alkaline Water** | 520cc | | |
| Granulated Sugar | 80g | | |
| Valencia Orange Puree | 300cc | | |

| Ingredient (C) | Amount | | |
|---|---|---|---|
| Valencia Orange Flavor | 5cc | | |

| | | | |
|---|---|---|---|
| * Nonglutinous rice ground by a stamp method and classified by a sieve (preferably 80-meshes) was used. | | | |
| ** Automatic Alkaline Water Preparing Device (Water Purifying System) was used. | | | |

The valencia orange ice cream was produced in accordance with the producing method of vanilla ice cream disclosed in the Example 1.

### Example 7: Nutritive Constitution Analysis Of Vanilla Ice Cream Of The Present Invention

The vanilla ice cream of the present invention was analyzed on the nutritive constitution thereof, and analysis results are shown in the following Table 8.

**Table 8**

| Item | Result | Method |
|---|---|---|
| Water | 71.5% | Heating-Drying Under Reduced Pressure |
| Protein | 3.7% | Kjeldahl Method (*1) |
| Lipid | 2.8% | Röse-Gottlieb Method |
| Fibre | Not Detected | Henneberg-Stohmann Method |
| Ash | 0.6% | Direct Ash Method |
| Sugar | 21.4% | (*2) |
| Energy | 126kcal/100g | (*3) |

| | | |
|---|---|---|
| *1 Nitrogen-Protein reduced coefficient; 6.25 | | |
| *2 100-(Water+Protein+Lipid+Fiber+Ash) | | |
| *3 Energy reduced coefficient; Protein;4, Lipid;9, Carbohydrate (Fiber+Sugar); 4. | | |

### Comparative Example 1: Nutritive Constitution Analysis Of Conventional Vanilla Ice Cream

The conventional vanilla ice cream was analyzed on the nutritive constitution thereof, and analysis results are shown in the following Table 9.

**Table 9**

| Item | Result | Method |
|---|---|---|
| Water | 56.1% | Heating-Drying Under Reduced Pressure |
| Protein | 4.1% | Kjeldahl Method (*1) |
| Lipid | 17.2% | Röse-Gottlieb Method |
| Fibre | Not Detected | Henneberg-Stohmann Method |
| Ash | 0.9% | Direct Ash Method |
| Sugar | 21.7% | (*2) |
| Energy | 258kcal/100g | (*3) |

| | | |
|---|---|---|
| *1 Nitrogen-Protein reduced coefficient; 6.25 | | |
| *2 100-(Water+Protein+Lipid+Fiber+Ash) | | |
| *3 Energy reduced coefficient; Protein;4, Lipid;9, Carbohydrate (Fiber+Sugar); 4. | | |

As apparent from the Table 8 (Example 7) and the Table 9 (Comparative Example 1), the ice cream of the present invention have remarkably reduced lipid, and also indicated low calorie of less than a half of the conventional ice cream.

Although the ice cream of the present invention and that of the conventional ice cream containing similar amounts of the sugar, since the sugar of the conventional ice cream is substantially a granulated sugar, in contrast thereto, the sugars of the present invention consist of a small amount of the granulated sugar, a sugar derived from starch of the rice flour, and sugars to be contained in fruits, et al there are differences on the constitution of the two sugars.

The ice cream of the present invention enables to improve the nutritive constitution of the conventional ice cream of being contained much fat and sugar with high amounts of percentage, and also improve the taste thereof by containing the ingredients comprising the rice flour, the low-fat milk, the low-fat fresh cream, the purified alkaline water, and the fruit juice.

In order to introduce the rice flour into the producing method of the ice cream, the inventors studied and found the following producing conditions;
(1) To prepare the rice flour having the appropriate particle sizes by grinding the rice.
(2) To conduct the heating treatment under a condition of high temperature and instant, for preventing the rice flour from solidification thereof.
(3) To adjust the pasteurizer to be able to stirr the all ingredients homogenously in a stirring tank thereof, and improve the mixability of the rice flour with the other ingredients.

## Claims

1. A method for producing ice cream comprising the steps of:
(a) mixing rice flour, low-fat and/or skimmed milk or fruit juice and/or puree, alkaline water and granulated sugar,
(b) heating and stirring the thus prepared mixture, and then cooling and stirring the mixture to prepare a base mix,
(c) adding a seasoning ingredient containing low-fat fresh cream or yoghurt, a liqueur or syrup, and optionally one of egg yolk, ground tea powder and coffee paste, one by one to the base mix and mixing therewith,
(d) mixing a flavouring with the mixture thus prepared, and
(e) preserving the thus prepared mixture by refrigeration.

2. A method as claimed in Claim 1 in which the base mix contains a fruit juice or puree, and the seasoning ingredient contains low-fat fresh cream, the liqueur and lemon juice.

3. A method as claimed in Claim 1 in which the seasoning ingredient contains yoghurt, syrup, and lemon juice.

4. A method as claimed in Claim 1 in which the base mix contains a fruit juice and/or puree, and the seasoning ingredient contains the liqueur and lemon water.

## Patentansprüche

1. Verfahren zur Herstellung von Speise-Eiscreme, bestehend aus den folgenden Schritten:
(a) Vermischen von Reismehl, fettarmer Milch und/oder Magermilch oder Fruchtsaft und/oder -püree, alkalischem Wasser und körnigem Zucker,
(b) Erwärmen und Rühren der so zubereiteten Mischung und Kühlen und Rühren der Mischung, um eine Grundmischung zuzubereiten,
(c) Zugeben einer Geschmackszutat, welche fettarme Sahne oder Joghurt, Likör oder Syrup oder wahlweise entweder Eigelb, zerriebenes Teepulver und Kaffeepaste enthält, nacheinander zu der Grundmischung und Vermischen mit dieser,
(d) Vermischen eines Aromastoffes mit dieser so zubereiteten Mischung und
(e) Haltbarmachen dieser so zubereiteten Mischung durch Einfrieren

2. Verfahren gemäß Anspruch 1, wobei die Grundmischung Fruchtsaft oder - puree enthält und wobei die Geschmackszutat fettarme Sahne, Likör und Zitronensaft enthält.

3. Verfahren gemäß Anspruch 1, wobei die Geschmackszutat Joghurt, Syrup und Zitronensaft enthält.

4. Verfahren gemäß Anspruch 1, wobei die Grundmischung Fruchtsaft und/oder - puree enthält und die Geschackszutat Likör und Zitronenwasser enthält.

## Revendications

1. Procédé de fabrication d'une crème glacée comprenant les étapes de :
(a) mélange de farine de riz, de lait à faible teneur en matières grasses et/ou écrémé ou de jus et/ou de purée de fruit, d'eau alcaline et de sucre granulé,
(b) chauffage et agitation du mélange ainsi préparé et, ensuite, refroidissement et agitation du mélange pour préparer un mélange de base,
(c) addition d'un ingrédient d'assaisonnement contenant de la crème fraîche à faible teneur en matières grasses ou du yaourt, une liquer ou du sirop et, en option, un élément parmi du jaune d'oeuf, de la poudre de thé broyé et de la pâte de café, un par un au mélange de base et mélange avec ces derniers,
(d) mélange d'un arôme avec le mélange ainsi préparé et
(e) conservation du mélange ainsi préparé par réfrigération.

2. Procédé selon la revendication 1, dans lequel le mélange de base contient du jus ou de la purée de fruit et l'ingrédient d'assaisonnement contient de la crème fraîche à faible teneur en matières grasses, la liqueur et du jus de citron.

3. Procédé selon la revendication 1, dans lequel l'ingrédient d'assaisonnement contient du yaourt, du sirop et du jus de citron.

4. Procédé selon la revendication 1, dans lequel le mélange de base contient du jus et/ou de la purée de fruit et l'ingrédient d'assaisonnement contient la liqueur et l'eau citronnée.
